# EUROPEAN PATENT APPLICATION

(11) **EP 4 779 749 A1**
(43) Date of publication of application: **22.07.2026**
(21) Application number: 25837950.2
(22) Date of filing: 01.07.2025
(51) Int. Cl.: H01M 10/42

(54) **BATTERY MANAGEMENT SYSTEM**

(30) Priority: 08.11.2024 KR 20240157664
(71) Applicant: LG Energy Solution, LTD., Seoul 07335 (KR)
(72) Inventor: KIM, Kyeongmin, Daejeon 34122 (KR); CHOI, Janghyeok, Daejeon 34122 (KR)
(74) Representative: Plasseraud IP
(86) International application number: PCT/KR2025/009273
(87) International publication number: WO 2026/100881

(57) **Abstract**

A system for managing battery allows cell monitoring controllers (CMCs) to be commonly used regardless of the number of battery cells included in a battery module by using the same type of cell monitoring controllers even when a battery is composed of battery modules having different numbers of battery cells.

## Description

### [Technical Field]

The present disclosure relates to a system for managing battery.

### [Background Art]

Currently commercialized secondary batteries include nickel cadmium batteries, nickel hydrogen batteries, nickel zinc batteries, lithium secondary batteries, etc. Among these, lithium secondary batteries are in the spotlight because they have almost no memory effect compared to nickel-based secondary batteries, and thus are free to charge and discharge and have a very low self-discharge rate and high energy density.

Recently, secondary batteries (batteries) are widely used for driving or energy storage in vehicles such as electric two-wheelers and electric cars, and medium and large devices such as an energy storage system (ESS). As a result, interest in batteries is increasing, and research and development related to batteries are being conducted more actively. Furthermore, in the case of batteries used in vehicles, commercialization and research on exchangeable common battery packs are also actively being conducted.

Lithium secondary batteries mainly use lithium oxides and carbon materials as positive and negative active materials. In addition, a lithium secondary battery includes an electrode assembly in which positive and negative electrode plates on which positive and negative active materials are respectively applied are arranged with a separator interposed therebetween, and an outer case (i.e., a battery case) that seals and houses the electrode assembly with an electrolyte. Depending on the shape of the outer case, the lithium secondary battery may be classified into a can-type secondary battery in which the electrode assembly is built into a metal can and a pouch-type secondary battery in which the electrode assembly is built into a pouch of an aluminum laminate sheet. Further, the can-type secondary battery may be further classified into a rectangular secondary battery and a cylindrical secondary battery depending on the shape thereof.

Secondary batteries may constitute a battery module or a battery pack in such a manner that multiple batteries are electrically connected to each other and stored together in a module case (module housing) or a pack case (pack housing). Here, each secondary battery included in the battery module or battery pack may be referred to as a battery cell.

In order to ensure stable performance of batteries in the form of a battery cell, a battery module, or a battery pack and to protect users who use devices equipped with batteries or batteries, it is very important to diagnose the state of a battery and take appropriate measures according to diagnosis results. As a representative technology for this, a control device such as a battery management system (BMS) is included in a battery pack, an energy storage system (ESS), etc. to diagnose a battery and take related measures.

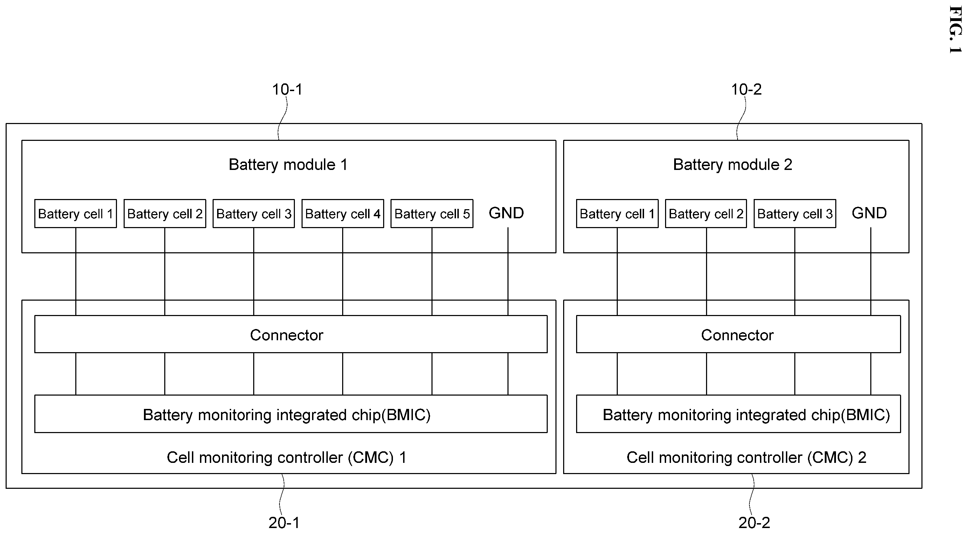

FIG. 1 is a diagram illustrating an example of a conventional battery management system.

A conventional battery management system (BMS) may include a master controller that measures the voltage, current, insulation resistance, etc. of a battery and controls the battery, and a cell monitoring controller (CMC) that measures the voltage of a battery cell, the voltage of a battery module, the temperature of the battery module, etc., and has a battery monitoring integrated chip (BMIC) mounted thereinside. Battery modules connected to each cell monitoring controller (CMC) are composed of multiple battery cells, and the number of battery cells and the size of the battery module are determined and designed according to customer's demand. In the case of a conventional battery management system in which battery modules have different numbers of battery cells in a battery, different types of cell monitoring controllers (CMCs) are used for the respective battery modules. Although some battery cell channels of a cell monitoring controller (CMC) that use more battery cell channels than the number of battery cells in the battery module may be processed as NC and a single type of cell monitoring controller (CMC) may be used, this causes a problem of unstable voltage values due to floating, and thus it is desirable to connect unused battery cell channels to the ground of the battery monitoring integrated chip (BMIC) to prevent problems due to floating. Accordingly, it is inevitable to change the internal circuit of the cell monitoring controller (CMC), and it is inevitable to use different types of cell monitoring controllers (CMCs).

Referring to FIG. 1, cell monitoring controller (CMC) 1 20-1 is connected to battery module 1 10-1 and may monitor various types of information on five battery cells included in battery module 1 10-1. In addition, cell monitoring controller (CMC) 2 20-2 is connected to battery module 2 10-2 and may monitor various types of information on three battery cells included in battery module 2 10-2. Here, since battery module 1 10-1 includes five battery cells and battery module 2 10-2 includes three battery cells, two cell monitoring controllers (CMCs) of the same type cannot be used, and cell monitoring controllers (CMCs) 1 20-1 and cell monitoring controllers (CMCs) 2 20-2 of different types need to be used. Accordingly, there is a problem that multiple cell monitoring controllers (CMCs) of different types must be used.

### [Disclosure]

### [Technical Problem]

According to an embodiment of the present disclosure, there is provided a system for managing battery using cell monitoring controllers (CMCs) of the same type even when a battery is composed of battery modules having various numbers of battery cells.

The aspects to be achieved in the present disclosure are not limited to the aspect mentioned above, and can be expanded in various manners within a scope that does not deviate from the spirit and scope of the present disclosure.

### [Technical Solution]

A system for managing battery according to an embodiment of the present disclosure includes a plurality of battery modules, and a battery management device including a plurality of cell monitoring controllers (CMCs) having the same internal circuit and respectively connected to the plurality of battery modules.

The plurality of battery modules may include at least two battery modules including different numbers of battery cells.

The cell monitoring controllers may be connected to the battery modules by changing a wire harness configuration depending on the numbers of battery cells of the battery modules connected to the cell monitoring controllers.

The cell monitoring controllers may be connected to the battery modules by changing the wire harness configuration such that at least one unused battery cell channel among entire battery cell channels is connected to a ground based on the numbers of battery cells of the battery modules connected to the cell monitoring controllers.

The ground may be a ground of a battery monitoring integrated chip (BMIC) included in the cell monitoring controllers.

### [Advantageous Effects]

According to an embodiment of the present disclosure, even if a battery is composed of battery modules having different numbers of battery cells, cell monitoring controllers (CMCs) can be commonly used regardless of the number of battery cells of a battery module by using the same type of CMC.

The effects according to the various embodiments of the present disclosure are not limited to the effects described above, and it is obvious to a person skilled in the art that various effects are inherent in the present disclosure.

### [Description of Drawings]

FIG. 1 is a diagram illustrating an example of a conventional battery management system.
FIG. 2 is a block diagram illustrating a system for managing battery according to an embodiment of the present disclosure.
FIG. 3 is a diagram illustrating an example of the system for managing battery according to an embodiment of the present disclosure.

### [Mode for Disclosure]

Hereinafter, embodiments of the present disclosure will be described in detail with reference to the attached drawings. The advantages and features of the embodiments of the present disclosure, and methods for achieving the same will become clear with reference to the contents described in detail below together with the attached drawings. However, the embodiments of the present disclosure are not limited to the embodiments described below, but may be implemented in various different forms, and the embodiments of the present disclosure are defined only by the scope of the claims.

Like reference numerals refer to like elements throughout the specification. Unless otherwise defined, all terms (including technical and scientific terms) used in the specification may be used in meanings that can be commonly understood by a person having ordinary knowledge in the technical field to which the embodiments of the present disclosure belong. In addition, terms defined in a commonly used dictionary shall not be ideally or excessively interpreted unless explicitly specifically defined.

In the present disclosure, the terms "first", "second", etc. are used to distinguish a particular component from other components, and the components described above are not limited by these terms. For example, the "first" component may be used to refer to an element of the same or similar form as the "second" component.

In this specification, identification symbols (e.g., a, b, c, etc.) for each step are used for convenience of explanation, and the identification symbols do not describe the order of steps, and the steps may occur in a different order than the stated order unless the context clearly indicates a specific order. That is, the steps may occur in the same order as the stated order, may be performed substantially simultaneously, or may be performed in the opposite order.

In the present disclosure, the terms "comprise", "comprising", and the like may indicate the presence of features (for example, numerical values, functions, operations, or components such as parts), but such terms do not exclude additional features.

Further, the term "~ part" described in this specification means a software or hardware component such as a field-programmable gate array (FPGA) or an ASIC, and the "~ part" performs certain roles. However, the "~ part" is not limited to software or hardware. The "~ part" may be configured to be in an addressable storage medium and may be configured to operate one or more processors. Accordingly, as an example, the "~ part" includes components such as software components, object-oriented software components, class components, and task components, processes, functions, properties, procedures, subroutines, segments of program code, drivers, firmware, microcode, circuits, data structures, and variables. Functions provided in the components and "~ parts" may be combined into a smaller number of components and "~ parts" or further separated into additional components and "~ parts".

Hereinafter, a system for managing battery according to an embodiment of the present disclosure will be described in detail with reference to the attached drawings.

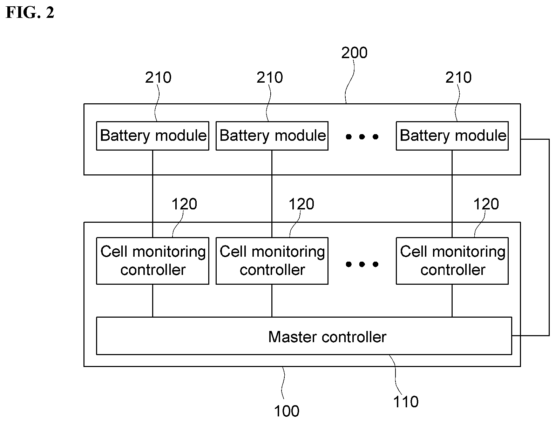

First, a system for managing battery according to an embodiment of the present disclosure will be described with reference to FIG. 2.

FIG. 2 is a block diagram illustrating a system for managing battery according to an embodiment of the present disclosure.

Referring to FIG. 2, the system for managing battery according to an embodiment of the present disclosure may include a battery management device 100 and a battery 200 connected to the battery management device 100.

The battery 200 may include a plurality of battery modules 210. Each battery module 210 may include a plurality of battery cells representing one secondary battery. Here, the plurality of battery modules 210 may include at least two battery modules 210 including different numbers of battery cells. For example, the plurality of battery modules 210 may include a battery module 210 composed of five battery cells and a battery module 210 composed of three battery cells.

The battery management device 100 may perform operations of diagnosing and controlling the battery 200. To this end, the battery management device 100 may include a plurality of cell monitoring controllers (CMCs) 120 respectively connected to the plurality of battery modules 210, and a master controller 110 connected to the battery 200 and the plurality of CMCs (120).

The master controller 110 may measure the voltage, current, insulation resistance, etc. of the battery 200 and control the battery 200.

The CMC 120 may measure the voltage of a battery cell, the voltage of the battery module 210, the temperature of the battery module 210, etc., and a battery monitoring integrated chip BMIC may be mounted inside the CMC 120.

To this end, the plurality of CMCs 120 may have the same internal circuit and may be respectively connected to the plurality of battery modules 210.

Here, the CMC 120 may be connected to the corresponding battery module 210 by changing the wire harness configuration depending on the number of battery cells of the battery module 210 connected thereto. That is, the CMC 120 may change the wire harness configuration such that at least one unused battery cell channel among the entire battery cell channels is connected to ground based on the number of battery cells of the battery module 210 connected thereto, and may be connected to the corresponding battery module 210. For example, if the number of entire battery cell channels is "5" and the number of battery cells of the battery module 210 is "3", the CMC 120 may change the wire harness configuration such that two unused battery cell channels are connected to ground, and may be connected to the corresponding battery module 210.

Here, the ground may be the ground of the battery monitoring integrated chip (BMIC) included in the CMC 120.

The operation of the battery management device 100 will be described in more detail. The battery management device 100 including the master controller 110 and the plurality of CMCs 120 may include a measurement unit (not shown), a storage unit (not shown), and a control unit (not shown), which are functionally divided components.

The measurement unit may be configured to measure state information of the battery 200. Here, the state information of the battery 200 may include an internal state and/or an external state of the battery 200. For example, the measurement unit may measure information such as the voltage, current, temperature, state of charge (SoC), depth of discharge (DoD), internal resistance, state of health (SoH), idle state, overvoltage or overcurrent state, and balancing state of the battery 200 as an internal state of the battery 200. For this purpose, the measurement unit may be equipped with various sensors such as a voltage sensor or a current sensor. As another example, the measurement unit may measure state information such as temperature, humidity, smoke, etc. around the battery 200 as an external state of the battery 200. For this purpose, the measurement unit may be equipped with sensors such as a temperature sensor, a humidity sensor, and a smoke sensor. In this respect, the measurement unit may be referred to as a sensor.

Here, the measurement unit may measure voltage, current, temperature, etc. through sensors to measure state information of the battery 200 one-dimensionally. In addition, the measurement unit may perform two-dimensional processing such as calculation on the information obtained one-dimensionally. For example, the measurement unit may measure state information of the battery 200 by calculating or estimating the state of the battery 200 such as the state of charge (SoC), internal resistance, state of health (SoH), and imbalancing based on state information such as the voltage, current, and temperature.

In addition, the measurement unit may transmit the measured state information of the battery 200 to the control unit.

The storage unit may be configured to store computer-executable instructions or program code, program data, and/or other suitable forms of information for each component of the battery management device 100, i.e., the measurement unit and/or the control unit, to perform their functions. A program stored in the storage unit may include a set of instructions executable by the control unit. In an embodiment of the present disclosure, the storage unit may be a memory (a volatile memory such as a random access memory, a nonvolatile memory, or a suitable combination thereof), one or more magnetic disc storage devices, optical disc storage devices, flash memory devices, other forms of storage media that can be accessed by the battery management device 100 and store desired information, or a suitable combination thereof.

In this case, the storage unit may be implemented in a form integrated into another component included in the battery management device 100, such as a component serving as the control unit. For example, the storage unit may be implemented in the form of an embedded memory mounted in a processor serving as the control unit.

The control unit may receive measured state information from the measurement unit. The control unit may perform a diagnostic operation and/or a control operation for the battery 200 using the state information received from the measurement unit.

At this time, the control unit may transmit information according to the diagnostic operation and/or the control operation for the battery 200 to another component or store the same. Here, the other component may be a component included inside the battery management device 100 according to an embodiment of the present disclosure, or a component included in another device existing outside the battery management device 100. In particular, when the target battery 200 is mounted in a vehicle, the battery management device 100 may transmit information according to the diagnostic operation and/or the control operation for the battery 200 to a vehicle-side upper control system, such as a vehicle control unit (VCU) or an electronic control unit (ECU).

Further, the control unit may transmit the information according to the diagnostic operation and/or the control operation for the battery 200 using various wired or wireless communication configurations or methods. For example, the control unit may transmit the information according to the diagnostic operation and/or the control operation for the battery 200 to a vehicle-side control system using controller area network (CAN) communication.

In addition, the control unit may be configured to control the charging operation or the discharging operation of the battery 200 as a control operation for the battery 200. At this time, the control unit may directly perform charging control or discharging control for the battery 200. The control unit may also indirectly instruct or control another component located inside or outside the battery management device 100 to perform charging control or discharging control.

In addition, the control unit may perform a processing operation for each state of the battery 200. In this case, the control unit may be configured to perform different processing operations for respective states. In addition, the control unit may perform at least partially identical processing operations for different states. Further, the processing operations performed by the control unit do not necessarily include only active operations, and may also include passive operations. In particular, the processing operations performed by the control unit may include operations that do not perform any control or communication.

In addition, when the control unit directly performs a processing operation for the battery 200, the control unit may transmit results of performed processing to other components.

In addition, the control unit may perform related operations or functions by selectively including a processor, a controller, an application-specific integrated circuit (ASIC), other chipsets, a logic circuit, a register, a communication modem, a data processing device, etc. known in the art at least partially. In addition, these operations may be implemented as software, and in this case, the program may be stored in the storage unit. In this respect, the term "control unit" may be replaced with terms such as a processor, a controller, and a chipset. In addition, at least some of the functions of the measurement unit may also be implemented as these components.

In addition, the control unit does not necessarily have to be physically integrated or located at the same location. For example, some of the functions of the control unit may be performed on the side of the battery 200, and other functions of the control unit may be performed on the vehicle side.

More specifically, at least a part of the control unit 130 may be implemented by a battery management system (BMS). In this case, at least a part of the control unit may be implemented in a form included in the battery 200. Alternatively, at least a part of the control unit may be located outside the battery management device 100. For example, at least some functions of the control unit may be implemented by a control device mounted on the vehicle, such as a VCU or an ECU. In addition, the measurement unit may also be implemented as an integrated or separate part or component.

Accordingly, the system for managing battery according to an embodiment of the present disclosure can use the CMCs 120 of the same type regardless of the number of battery cells of the battery module 210 even when the battery 200 is composed of battery modules 210 having various numbers of battery cells, thereby allowing the CMCs 120 to be commonly used.

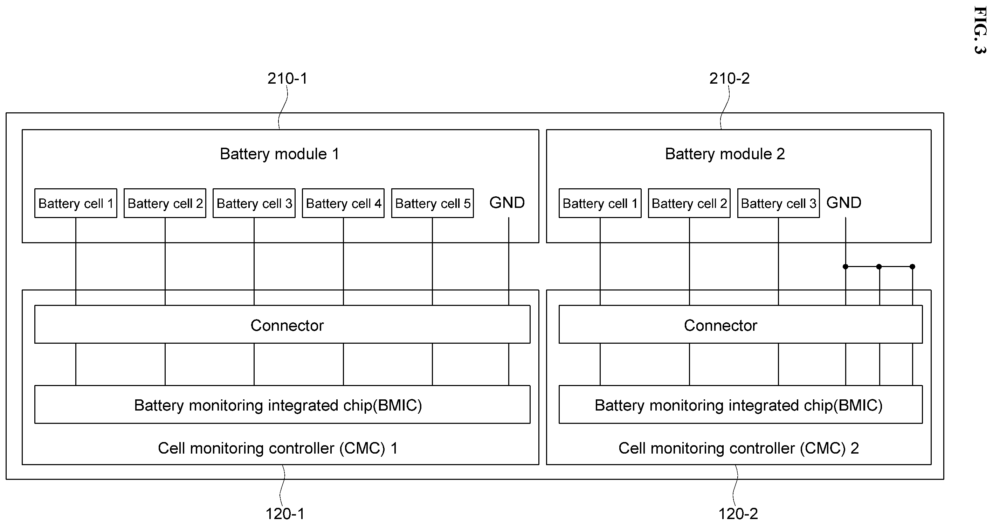

An example of the system for managing battery according to an embodiment of the present disclosure will be described with reference to FIG. 3.

FIG. 3 is a diagram illustrating an example of the system for managing battery according to an embodiment of the present disclosure.

Referring to FIG. 3, CMC 1 120-1 is connected to battery module 1 210-1 and may monitor various types of information on five battery cells included in battery module 1 210-1. In addition, CMC 2 120-2 is connected to battery module 2 210-2 and may monitor various types of information on three battery cells included in battery module 2 210-2. Here, battery module 1 210-1 includes five battery cells and battery module 2 210-2 includes three battery cells, but the system for managing battery according to an embodiment of the present disclosure may use CMC 1 120-1 and CMC 2 120-2 of the same type. That is, two battery modules 210 having different numbers of battery cells can be connected by using two CMCs 120 having the same internal circuits. Accordingly, the CMCs 120 can be commonly used regardless of the number of battery cells of the battery modules 210.

The operations according to the embodiments of the present disclosure described above can be implemented in the form of program instructions that can be performed through various computer means and recorded on a computer-readable storage medium. The computer-readable storage medium refers to any medium that participates in providing instructions to a processor for execution. The computer-readable storage medium may include program instructions, data files, data structures, or a combination thereof. For example, the computer-readable storage medium may include a magnetic medium, an optical storage medium, a memory, etc. The computer program may be distributed on computer systems connected through a network, and computer-readable code may be stored and executed in a distributed manner. Functional programs, code, and code segments for implementing the embodiments of the present disclosure may be easily inferred by programmers in the technical field to which the embodiments of the present disclosure belong.

The embodiments of the present disclosure are intended to explain the technical idea, and the scope of the technical idea of the embodiments of the present disclosure is not limited by these embodiments. The protection scope of the embodiments of the present disclosure should be interpreted by the following claims, and all technical ideas within the equivalent scope should be interpreted as being included in the scope of the rights of the embodiments of the present disclosure.

### <Detailed Description of Main Elements>

100: Battery management device
110: Master controller
120: Cell monitoring controller
200: Battery
210: Battery module

## Claims

1. A system for managing battery comprising:
a plurality of battery modules; and
a battery management device including a plurality of cell monitoring controllers (CMCs) having the same internal circuit and respectively connected to the plurality of battery modules.

2. The system for managing battery of claim 1, wherein the plurality of battery modules includes at least two battery modules including different numbers of battery cells.

3. The system for managing battery of claim 2, wherein the cell monitoring controllers are connected to the battery modules by changing a wire harness configuration depending on the numbers of battery cells of the battery modules connected to the cell monitoring controllers.

4. The system for managing battery of claim 3, wherein the cell monitoring controllers are connected to the battery modules by changing the wire harness configuration such that at least one unused battery cell channel among entire battery cell channels is connected to a ground based on the numbers of battery cells of the battery modules connected to the cell monitoring controllers.

5. The system for managing battery of claim 4, wherein the ground is a ground of a battery monitoring integrated chip (BMIC) included in the cell monitoring controllers.
